# FASCICULE DE BREVET EUROPEEN

(11) **EP 2 724 958 B1**
(45) Date de publication et mention de la délivrance du brevet: **10.02.2016**
(21) Numéro de dépôt: 12189800.1
(22) Date de dépôt: 24.10.2012
(51) Int. Cl.: B65D 85/04, B23K 9/133, B65H 49/08, B65H 49/38, B23K 26/14, B23K 26/20, B23K 28/02

(54) **Conteneur à sangle de levage pour bobine de fil de soudage, utilisation d'un conteneur, procédé de soudage**
Behälter mit Hubgurt für Schweißdrahtspule, Verwendung eines Containers, Schweißverfahren
Container with lifting strap for a coil of welding wire, use of a container, welding process

(43) Date de publication de la demande: 30.04.2014
(73) Titulaire: FRO - Air Liquide Welding Italia S.p.A., 37135 Verone (IT)
(72) Inventeur: Scappin, Michele, 31003 CASTELFRANCO (IT); Bizzotto, Renato, 35014 Fontaniva (PD) (IT); Carabelli, Mauro, 35126 Padova (IT)
(74) Mandataire: Pittis, Olivier

(56) Documents cités:
- EP-A1- 1 616 814
- EP-A1- 1 932 612
- EP-A1- 2 123 587
- EP-A2- 1 211 195
- DE-U1-202004 000 906

## Description

La présente invention concerne un conteneur ou un fût pour l'emballage, le stockage, le transport et le dévidage d'une bobine de fil de soudage comprenant des sangles ou ceintures pour le levage et le transport dudit conteneur.

Les bobines de fil de soudage sont classiquement conditionnées dans des conteneurs ou fûts, comme illustré par les documents EP-A-636098, US-A-4869367 ou US-A-5105943, qui servent à protéger les bobines pendant son stockage ou son transport, et à faciliter leurs manipulations.

Lorsque les conteneurs ou fûtes contiennent des bobines de poids élevé, c'est-à-dire typiquement de 200 à 1000 kg, il est usuel de les agencer sur des palettes de transport, comme rappelé par les documents EP-A-636098 ou EP-A-1352838.

De manière alternative, certains conteneurs ou fûts sont dotés de sangles ou ceintures de levage permettant de soulever et de transporter lesdits conteneurs, en particulier au moyen d'un crochet de grue ou analogue.

Une telle configuration de fût à sangles est décrite par le document US-A-2003/019776 et aussi par les documents DE-U-202004000906 et EP-A-1932612. Plus précisément, le conteneur comprend des sangles formant des boucles qui sortent du conteneur par des orifices aménagés dans la paroi périphérique dudit conteneur qui est généralement réalisée d'un matériau léger et bon marché, tel du carton.

Bien que répandue, une telle solution n'est pas idéale car les sangles peuvent opérer des cisaillements ou des déformations de ladite paroi périphérique du conteneur au niveau desdits orifices susceptibles d'engendrer une dégradation du fût, voire une déchirure du conteneur et sa chute subséquente pendant une opération de levage, et conduit donc un risque accru d'accident corporel pour les personnels se trouvant à proximité.

En effet, pendant le levage du fût par un crochet de grue ou analogue venant ce raccorder auxdites sangles, on observe :
- une compression du fût qui d'une section habituellement circulaire a tendance à devenir ovale. Or, cette ovalisation peut engendrer non seulement une ouverture intempestive du fût du fait des forces de compression s'exerçant alors sur le couvercle fermant normalement le fût et qui tendent à le désolidariser et à le chasser du corps du fût, mais aussi une déformation intempestive du corps cylindrique du fût, voire du fil situé à l'intérieur.
- un risque de coupure intempestive des ceintures ou sangles, lors de l'ouverture du conteneur qui est normalement entouré de film plastique protecteur, par les ouvriers qui sont chargés de couper le film plastique protecteur avec un couteau ou un cutter, avant son utilisation.
- un risque de déplacement et de chute du fût par cisaillement du cylindre en carton par les ceintures qui, en passant par les ouvertures extérieures et sous l'effet du poids, déchirent le carton avec chute du fût et sortie du fil à l'extérieur du fût, et risque pour les personnels.

En d'autres termes, ces conteneurs ou fûts à sangles émergeant par des orifices aménagés dans la paroi latérale périphérique du conteneur ou fût utilisé pour l'emballage, le stockage, le transport et le dévidage d'une bobine de fil de soudage présentent plusieurs inconvénients majeurs, en particulier en cas de rupture et de chute, ils peuvent conduire non seulement à des pertes de matériel du fait d'une dégradation du fût et/ou du fil qui deviennent inutilisables mais aussi engendrer des dommages corporels chez les personnels se trouvant à proximité.

Par ailleurs, le document EP-A-1616814 enseigne un conteneur pour bobine de fil de soudage comprenant une sangle de levage venant ceinturer la bobine par le dessous et passant dans des connecteurs en forme de barre fixés aux bords supérieurs du conteneur.

En outre, le document EP-A-2123587 enseigne une enveloppe souple destinée à recevoir un conteneur avec une bobine de fil de soudage comprenant une paie de sangles venant se croiser dans le fond de l'enveloppe souple pour permettre un levage du conteneur renfermant la bobine. Un emballage analogue est enseigné par le document EP-A-1211195.

Le problème qui se pose est dès lors de proposer un conteneur ou fût de fil de soudage amélioré ne présentant pas les inconvénients susmentionnés, c'est-à-dire permettant d'obtenir un levage aisé du conteneur au moyen d'un crochet de grue ou analogue sans engendrer de risque de déchirure de l'emballage périphérique et donc de chute du conteneur et de blessure du personnel.

La solution de l'invention selon la revendication 1 est alors un conteneur ou fût de soudage pour bobine de fil de soudage comprenant :
- un corps de conteneur comprenant une paroi périphérique externe et un volume interne conçu et dimensionné pour recevoir une bobine de fil de soudage,
- ledit corps de conteneur comprenant au moins un premier fond à sa base, et un couvercle à son extrémité supérieure, et
- au moins une sangle de levage s'étendant majoritairement à l'intérieur du volume interne du corps de conteneur, ladite sangle de levage comprenant des portions d'extrémités situées à l'extérieur du conteneur, lesdites portions d'extrémités de sangle sortant du conteneur par des orifices de passage,
caractérisé en ce que lesdits orifices de passage sont aménagés dans le couvercle venant obturer l'extrémité supérieure du corps de conteneur.

Il est à noter que, dans le cadre de la présente invention, les termes « fût » et « conteneur » sont considérés comme strictement équivalents et seront utilisés indifféremment l'un de l'autre pour désigner une structure d'emballage apte à, conçue et dimensionnée pour recevoir et stocker une bobine de fil de soudage dans son espace, volume ou compartiment interne.

Selon le cas, le conteneur ou fût de soudage de l'invention peut comprendre l'une ou plusieurs des caractéristiques techniques suivantes :
- ladite au moins une sangle de levage est formée d'un matériau souple
- la (ou les) sangle est formé de tissu, de polymère, de fibres naturelles, synthétiques ou métalliques.
- la paroi périphérique externe délimite le volume interne, c'est-à-dire le compartiment interne recevant la bobine de soudage.
- la paroi périphérique externe est de forme générale cylindrique ou polygonale, par exemple carrée, hexa ou octogonale, de préférence cylindrique.
- ladite au moins une sangle de levage est longiforme, c'est-à-dire qu'elle est en forme de bande.
- ladite au moins une sangle de levage a une longueur comprise entre 1,2 m et 10 m environ et/ou une largeur comprise entre 2 et 20 cm environ.
- il comprend de 1 à 10 sangles de levage, de préférence 1 à 3 sangles de levage.
- il contient une bobine de fil de soudage, c'est-à-dire d'un fil électrode fusible. De tels fils sont couramment utilisés dans des opérations de soudage à l'arc ou laser, voire de soudage laser/arc.
- il contient une bobine de fil de soudage comprenant un fil de soudage enroulé en forme de couronne.
- il contient une bobine de fil de soudage de masse comprise entre 100 et 1000 kg.
- les portions d'extrémités situées à l'extérieur du conteneur comprennent chacune une structure d'accrochage permettant leur accrochage à un crochet de levage, en particulier à un crochet de grue ou analogue.
- les portions d'extrémités comprennent chacune une structure d'accrochage en forme de boucle. Ces structures d'accrochage en forme de boucles peuvent être formées de la même matière que la sangle ou d'une matière différente.
- au centre du volume interne du corps de conteneur est positionnée une structure interne de maintien de la bobine.
- la structure interne de maintien de la bobine est un cylindre creux, de préférence un cylindre s'étendant sur au moins 50% de la hauteur interne du conteneur, de préférence encore sur au moins 80% de la hauteur interne, avantageusement sur la totalité ou quasi-totalité de la hauteur interne du conteneur.
- le premier fond du corps de conteneur comprend une première structure de positionnement coopérant avec la structure interne de maintien de la bobine pour permettre un positionnement prédéfini de ladite structure interne de maintien de la bobine au sein du volume interne du corps de conteneur, de préférence un positionnement centré du cylindre creux.
- le couvercle comprend, sur une face interne située du côté du compartiment interne, une seconde structure de positionnement coopérant avec la structure interne de maintien de la bobine pour permettre un positionnement prédéfini du couvercle par rapport à ladite structure interne de maintien de la bobine, de préférence un positionnement centré du couvercle par rapport au cylindre creux.
- le couvercle est amovible, c'est-à-dire qu'il peut être fixé ou, à l'inverse, enlevé du corps du conteneur par un utilisateur.
- le couvercle est en fibres de bois, en bois, en carton renforcé ou en matériau plastique.
- les orifices de passage aménagés dans le couvercle ont une forme oblongue. Typiquement, ils ont une plus grande dimension, c'est-à-dire une longueur L, comprise entre 3 et 25 cm environ, typiquement entre 4 et 10 cm environ.
- au moins deux des orifices de passage du couvercle sont aménagés de manière symétrique par rapport au centre du couvercle.
- au moins deux des orifices de passage aménagés dans le couvercle et symétriques par rapport au centre dudit couvercle ont une forme oblongue présentant une longueur L donnée formant un segment de droite perpendiculaire au diamètre D joignant lesdits orifices de passage.
- le corps de conteneur comprend, à sa base, un premier fond et un deuxième fond, ledit deuxième fond étant situé extérieurement par rapport au premier fond de sorte de former une structure à double fond.
- le corps de conteneur comprend, à sa base, un premier fond et un deuxième fond en contact l'un avec l'autre.
- le corps de conteneur comprend, à sa base, un premier fond et un deuxième fond espacés l'un de l'autre de quelques millimètres à quelques centimètres.
- ladite au moins une sangle de levage s'étend, au moins en partie, entre lesdits premier fond et deuxième fond.
- la première structure de positionnement et la seconde structure de positionnement sont des structures tridimensionnelles ayant une forme choisie pour coopérer avec la forme d'au moins une partie de la structure interne de maintien de la bobine de manière à assurer un couplage et/ou un centrage de la première structure de positionnement et de la seconde structure de positionnement avec la structure interne de maintien de la bobine. Ainsi, typiquement la première structure de positionnement et de la seconde structure de positionnement ont une forme de disque ou une forme cylindrique et la structure interne de maintien de la bobine est un cylindre creux, de sorte que la première structure de positionnement et de la seconde structure de positionnement viennent s'insérer à l'intérieur du cylindre creux constituant la structure interne de maintien de la bobine, ou inversement.

L'invention concerne aussi l'utilisation d'un conteneur selon la revendication 14 c'est-à-dire un conteneur tel que décrit ci-dessus, pour conditionner une bobine de fil de soudage.

De préférence, la bobine de fil de soudage comprend un fil électrode fusible et/ou ledit fil est enroulé en forme de couronne.

Par ailleurs, l'invention porte également sur un procédé de soudage à l'arc selon la revendication 15, par faisceau laser ou hybride laser-arc mettant en oeuvre un conteneur selon l'invention, lequel conteneur contient une bobine de fil-électrode de soudage fusible, en particulier un fil plein ou un fil fourré.

L'invention va être mieux comprise grâce aux explications suivantes faites en référence aux Figures annexées parmi lesquelles :
- la Figure 1 est une vue schématique en coupe d'un conteneur ou fût pour bobine de fil de soudage selon l'art antérieur,
- la Figure 2 est une vue de dessus du couvercle du conteneur de la Figure 1,
- la Figure 3 est une vue schématique en coupe d'un mode de réalisation d'un conteneur ou fût pour bobine de fil de soudage selon la présente invention,
- la Figure 4 est une vue de dessus d'un mode de réalisation du couvercle du conteneur de la Figure 3, et
- la Figure 5 est une vue de dessous du couvercle de la Figure 4.

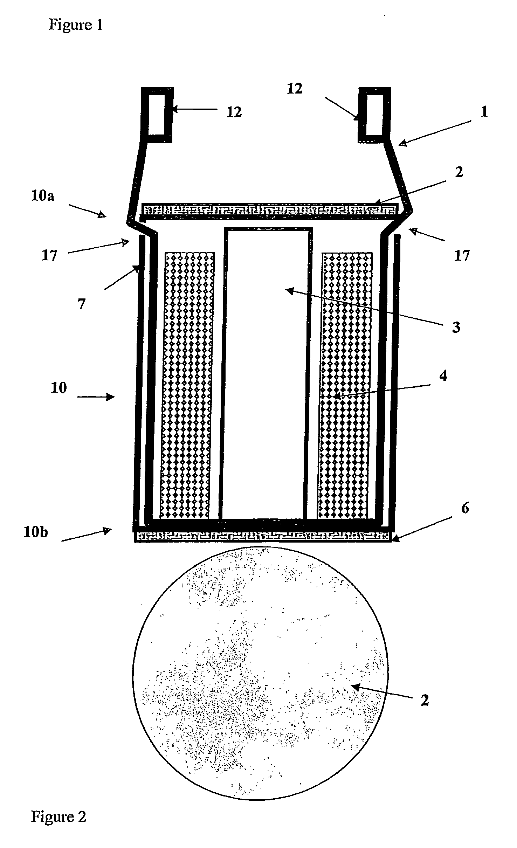

La Figure 1 représente un conteneur 10 pour bobine de fil de soudage 4 selon l'art antérieur comprend une ou des sangles 1 munies de boucles 12 d'accrochage qui sortent du conteneur 10 par des orifices 17 aménagés dans la paroi périphérique externe 7 en carton dudit conteneur 10. La bobine de fil 4 a une forme de couronne et comprend en son centre un cylindre de maintien 3. La bobine 4 et le cylindre de maintien 3 reposent sur le fond 6 du conteneur situé à sa base 10b.

Comme visible sur la Figure 2, le couvercle supérieur 2 qui obture l'extrémité supérieure 10a du conteneur 10 est totalement plein, c'est-à-dire qu'il ne comporte aucun orifice de passage des sangles 2.

Comme déjà expliqué, une telle solution pose problème car la ou les sangles 2 peuvent opérer des cisaillements ou des déformations de la paroi périphérique 3 du conteneur au niveau des orifices 17 susceptibles d'engendrer une dégradation du corps 7 du fût 10, en particulier une déchirure du conteneur 10 au niveau des orifices 17 et sa chute subséquente pendant une opération de levage.

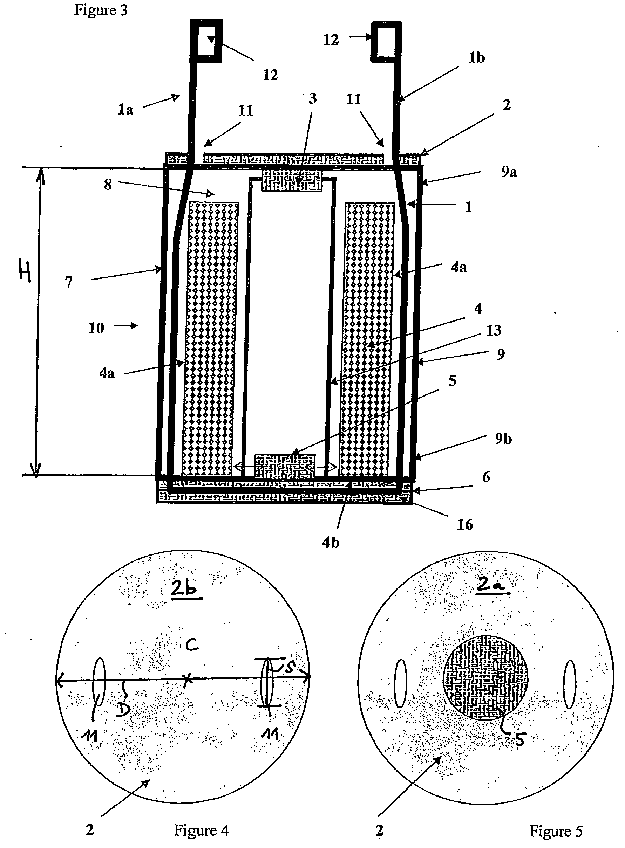

Afin d'y remédier, dans le cadre de la présente invention, on propose un conteneur 10 modifié dont un mode de réalisation est représenté en Figures 3 à 5.

Plus précisément, la Figure 3 est une vue schématique en coupe d'un mode de réalisation d'un conteneur ou fût 10 pour bobine de fil 4 de soudage selon la présente invention comprenant un corps de conteneur 9 à paroi périphérique 7 externe, ici de forme cylindrique, délimitant un volume interne 8 formant un compartiment conçu et dimensionné pour recevoir une bobine de fil 4 de soudage, en particulier un fil enroulé en forme de couronne, de masse comprise entre 100 et 1000 kg environ.

Le corps de conteneur 9 comprend, à sa base 9b, un premier fond 6 sur lequel repose la bobine de fil 4 et, à son extrémité supérieure 9a, un couvercle 2 amovible venant obturer, c'est-à-dire fermer, l'ouverture du fût 10.

Dans ce mode de réalisation, le conteneur comprend une sangle de levage qui s'étend majoritairement à l'intérieur du volume interne 8 du corps de conteneur 9, c'est-à-dire que la plus grande partie de la sangle 1 se trouve à l'intérieur du conteneur. En fait, la sangle 1 s'étend, de façon symétrique par rapport au centre du conteneur 10, le long de la surface latérale 4a de la bobine 4 et en-dessous de la bobine 4.

La sangle de levage 1 a une forme de bande aplatie et est réalisée en un matériau souple, tel que du tissu, un polymère, des fibres naturelles, synthétiques ou métalliques. Bien entendu, plusieurs sangles 1 peuvent être utilisées au lieu d'une seule.

Cette sangle de levage 1 comprenant des portions d'extrémités 1a, 1b qui sont situées à l'extérieur du conteneur 10 et comprennent des boucles d'accrochage 12 aptes à et dimensionnées pour pouvoir être accrochées à un crochet de grue ou analogue de manière à permettre un levage du conteneur 10 grâce à ces boucles 12.

En fait, les portions d'extrémités 1a, 1b de sangle 1 ressortent du conteneur 10 par des orifices de passage 11 qui, selon l'invention, sont aménagées dans le couvercle 2 venant obturer l'extrémité supérieure 9a du corps de conteneur 9, comme visible sur les Figures 3 à 5.

Plus précisément, comme illustré en Figures 4 et 5, les orifices de passage 11 aménagés dans le couvercle 2 ont une forme oblongue, c'est-à-dire allongée pour faciliter le passage de la sangle 1.

De préférence, les deux des orifices de passage 11 du couvercle 2 sont aménagés de manière symétrique par rapport au centre C dudit couvercle 2 et présentent une longueur donnée L formant un segment de droite S perpendiculaire au diamètre D joignant lesdits orifices de passage 11, comme schématisé en Figure 4.

Une telle configuration de fût 10 permet de résoudre les problèmes des fûts de l'art antérieur car la ou les sangles ou ceintures 1 qui sortent verticalement du couvercle 2 ne déforment pas et n'abiment pas le corps 9 cylindrique, lors d'un levage du fût 10, car ils ne sortent pas au travers de la paroi verticale 7 du corps de fût 9, donc ne risquent pas de déchirer ou de cisailler ladite paroi sous l'effet de la masse du fût, ni d'en provoquer une déformation par écrasement/compression.

Le mode de réalisation du couvercle représenté en Figures 4 et 5 conduit à une faible compression du couvercle, sous l'effet de la tension de la sangle 1, lors d'un levage. Toutefois, cette faible compression est compensée par la structure même du couvercle et également du fait de sa constitution. De préférence, il est formé d'une structure en fibres de bois chauffées à la vapeur et compressées renforcée par un disque central 5, par exemple en bois, destiné à venir s'insérer dans le cylindre interne de maintien 13 situé au centre de la bobine 4 en forme de couronne, de manière à permettre de renforcer et rigidifier toute la structure du fut 10.

Avec le mode de réalisation de l'invention, le risque de coupure intempestive de ou des sangles 1 par un opérateur, lors du défilmage du fût, avant son utilisation, est réduit, voire éliminé, du fait de la position des sangles sur le sommet du fût 10, donc en position éloignée par rapport à la zone latérale où l'opérateur va couper le film extensible avec un cutter ou analogue pour accéder au fût.

Par ailleurs, afin d'éviter ou de minimiser les risques de détérioration de la sangle 1 dans la partie basse du fût 10, on prévoit, à la base 9b du conteneur 9, une structure en double fond comprenant le premier fond 6 et un deuxième fond 16, ledit deuxième fond 16 étant situé extérieurement par rapport au premier fond 6.

Les deux fonds 6, 16 peuvent être légèrement espacés l'un de l'autre, ou alors en contact l'un avec l'autre, mais dans tous les cas, la (ou les) sangle de levage 1 s'étend entre les premier fond 6 et deuxième fond 16, comme illustré en Figure 3.

En d'autres termes, la sangle 1 forme donc une sorte de U venant entourer la bobine 4 en passant le long de ses flancs latéraux opposés 4a et en dessous la bobine 4, c'est-à-dire dans le double fond 6, 16.

Ainsi, il est possible de soulever au moyen d'un crochet de grue, l'ensemble formé de la bobine 4 et du fût 10 grâce à la sangle 1 munie des boucles d'accrochage 12, ladite sangle venant soulever la bobine 4 par le dessous 4b tout en la maintenant fermement sur les flancs 4a.

En outre, au centre du volume interne 8 du corps de conteneur 9 est positionnée une structure interne 13 de maintien de la bobine 4, à savoir un cylindre central creux.

Afin d'assurer un bon positionnement et centrage dudit cylindre central creux 13 dans le conteneur 10, le premier fond 6 comprend une première structure de positionnement 5, tel un disque, coopérant avec la structure interne 13 de maintien de la bobine. Plus précisément, le cylindre central creux 13 vient s'enficher sur la première structure de positionnement 5.

Par ailleurs, le couvercle 2 comprend lui aussi, sur sa face interne 2a située du côté intérieur du conteneur 10 et du compartiment interne 8, c'est-à-dire du côté de la bobine 4, une seconde structure de positionnement 3, par exemple un deuxième disque, coopérant avec la structure interne 13 de maintien de la bobine 4 pour permettre un positionnement prédéfini du couvercle 2 par rapport à ladite structure interne 13 de maintien de la bobine 4, de préférence un positionnement centré du couvercle 2 par rapport au cylindre creux formant ladite structure interne 13 de maintien de la bobine.

Là encore, le cylindre central creux 13 vient s'enficher sur la seconde structure de positionnement 3 pour permettre le centrage du couvercle 2 sur le conteneur 10.

La première structure de positionnement 5 et la seconde structure de positionnement 3 peuvent être de forme identique ou différente.

Un tel conteneur 10 peut avantageusement être utilisé dans un procédé de soudage à l'arc, par faisceau laser ou hybride laser-arc, en particulier en soudage à l'arc de type MIG/MAG.

## Revendications

1. Conteneur (10) pour bobine (4) de fil de soudage comprenant :
- un corps de conteneur (9) comprenant une paroi périphérique (7) externe et un volume interne (8) conçu et dimensionné pour recevoir une bobine de fil (4) de soudage,
- ledit corps de conteneur (9) comprenant au moins un premier fond (6) à sa base (9b), et un couvercle (2) à son extrémité supérieure (9a), et
- au moins une sangle de levage (1) s'étendant majoritairement à l'intérieur du volume interne (8) du corps de conteneur (9), ladite sangle de levage (1) comprenant des portions d'extrémités (1a, 1b) situées à l'extérieur du conteneur (10), lesdites portions d'extrémités (1a, 1b) de sangle (1) sortant du conteneur (10) par des orifices de passage (11),
**caractérisé en ce que** lesdits orifices de passage (11) sont aménagés dans le couvercle (2) venant obturer l'extrémité supérieure (9a) du corps de conteneur (9).

2. Conteneur selon la revendication précédente, **caractérisé en ce que** les portions d'extrémités (1a, 1b) situées à l'extérieur du conteneur (10) comprennent chacune une structure d'accrochage (12) permettant leur accrochage à un crochet de levage, en particulier à un crochet de grue.

3. Conteneur selon l'une des revendications précédentes, **caractérisé en ce que** les portions d'extrémités (1a, 1b) comprennent chacune une structure d'accrochage (12) en forme de boucle.

4. Conteneur selon l'une des revendications précédentes, **caractérisé en ce qu'**au centre du volume interne (8) du corps de conteneur (9) est positionnée une structure interne (13) de maintien de la bobine (4).

5. Conteneur selon l'une des revendications précédentes, **caractérisé en ce que** le premier fond (6) du corps (9) de conteneur comprend une première structure de positionnement (5) coopérant avec la structure interne (13) de maintien de la bobine (4) pour permettre un positionnement prédéfini de ladite structure interne (13) de maintien de la bobine (4) au sein du volume interne (8) du corps de conteneur (9), de préférence un positionnement centré du cylindre creux.

6. Conteneur selon l'une des revendications précédentes, **caractérisé en ce que** le couvercle (2) comprend, sur une face interne (2a) située du côté du compartiment interne (8), une seconde structure de positionnement (3) coopérant avec la structure interne (13) de maintien de la bobine (4) pour permettre un positionnement prédéfini du couvercle (2) par rapport à ladite structure interne (13) de maintien de la bobine (4), de préférence un positionnement centré du couvercle (2) par rapport au cylindre creux.

7. Conteneur selon l'une des revendications précédentes, **caractérisé en ce que** le couvercle (2) est amovible, de préférence le couvercle (2) est en fibres de bois.

8. Conteneur selon l'une des revendications précédentes, **caractérisé en ce que** les orifices de passage (11) aménagés dans le couvercle (2) ont une forme oblongue.

9. Conteneur selon l'une des revendications précédentes, **caractérisé en ce qu'**au moins deux des orifices de passage (11) du couvercle (2) sont aménagés de manière symétrique par rapport au centre (C) dudit couvercle (2).

10. Conteneur selon l'une des revendications précédentes, **caractérisé en ce que** ladite au moins une sangle de levage (1) est formée d'un matériau souple.

11. Conteneur selon l'une des revendications précédentes, **caractérisé en ce qu'**au moins deux des orifices de passage (11) aménagés dans le couvercle (2) et symétriques par rapport au centre (c) dudit couvercle (2) ont une forme oblongue présentant une longueur donnée (L) formant un segment de droite (S) perpendiculaire au diamètre (D) joignant lesdits orifices de passage (11).

12. Conteneur selon l'une des revendications précédentes, **caractérisé en ce que** le corps de conteneur (9) comprend, à sa base (9b), un premier fond (6) et un deuxième fond (16), ledit deuxième fond (16) étant situé extérieurement par rapport au premier fond (6) de sorte de former une structure à double fond (6, 16).

13. Conteneur selon l'une des revendications précédentes, **caractérisé en ce que** ladite au moins une sangle de levage (1) s'étend, au moins en partie, entre lesdits premier fond (6) et deuxième fond (16).

14. Utilisation d'un conteneur (10) selon l'une des revendications précédentes pour conditionner une bobine de fil de soudage (4).

15. Procédé de soudage à l'arc, par faisceau laser ou hybride laser-arc mettant en oeuvre un conteneur (10) selon l'une des revendications 1 à 13 contenant une bobine de fil de soudage (4).

## Patentansprüche

1. Behälter (10) für eine Schweißdrahtspule (4), folgendes umfassend:
- einen Behälterkörper (9) eine umlaufende Außenwand (7) und ein Innenvolumen (8) umfassend, der ausgeführt und bemessen ist, um eine Schweißdrahtspule (4) aufzunehmen,
- wobei der besagte Behälterkörper (9) an seiner Basis (9b) zumindest einen ersten Boden (6), und an seinem oberen Ende (9a) einen Deckel (2) umfasst, und
- zumindest einen Hebegurt (1), der sich mehrheitlich im Inneren des Innenvolumens (8) des Behälterkörpers (9) erstreckt, wobei der besagte Hebegurt (1) Endabschnitte (1a, 1b) umfasst, die sich außerhalb des Behälters (10) befinden, wobei die besagten Endabschnitte (1a, 1b) des Gurtes (1) durch Durchgangsbohrungen (11) aus dem Behälter (10) austreten,
**dadurch gekennzeichnet, dass** die besagten Durchgangsbohrungen (11) im Deckel (2) angeordnet sind, der das obere Ende (9a) des Behälterkörpers (9) abdeckt.

2. Behälter nach dem vorherigen Anspruch, **dadurch gekennzeichnet, dass** die Endabschnitte (1a, 1b), die sich außerhalb des Behälters (10) befinden, jeweils eine Hängestruktur (12) umfassen, die ihr Aufhängen an einem Hebehaken, im Speziellen an einem Kranhaken ermöglichen.

3. Behälter nach einem der vorherigen Ansprüche, **dadurch gekennzeichnet, dass** die Endabschnitte (1a, 1b) jeweils eine Hängestruktur (12) in Form einer Schleife umfassen.

4. Behälter nach einem der vorherigen Ansprüche, **dadurch gekennzeichnet, dass** im Zentrum des Innenvolumens (8) des Behälterkörpers (9) eine Innenstruktur (13) zum Halten der Spule (4) positioniert ist.

5. Behälter nach einem der vorherigen Ansprüche, **dadurch gekennzeichnet, dass** der erste Boden (6) des Behälterkörpers (9) eine erste Positionierungsstruktur (5) umfasst, die mit der Innenstruktur (13) zum Halten der Spule (4) zusammenwirkt, um eine vorbestimmte Positionierung der besagten Innenstruktur (13) zum Halten der Spule (4) innerhalb des Innenvolumens (8) des Behälterkörpers (9), vorzugsweise eine zentrierte Positionierung des Hohlzylinders, zu ermöglichen.

6. Behälter nach einem der vorherigen Ansprüche, **dadurch gekennzeichnet, dass** der Deckel (2) auf einer Innenseite (2a), die sich auf Seiten des Innenraums (8) befindet, eine zweite Positionierungsstruktur (3) umfasst, die mit der Innenstruktur (13) zum Halten der Spule (4) zusammenwirkt, um eine vorbestimmte Positionierung des Deckels (2) im Verhältnis zur besagten Innenstruktur (13) zum Halten der Spule (4), vorzugsweise eine zentrierte Positionierung des Deckels (2) im Verhältnis zum Hohlzylinder, zu ermöglichen.

7. Behälter nach einem der vorherigen Ansprüche, **dadurch gekennzeichnet, dass** der Deckel (2) abnehmbar ist und der Deckel (2) vorzugsweise aus Holzfasern gefertigt ist.

8. Behälter nach einem der vorherigen Ansprüche, **dadurch gekennzeichnet, dass** die Durchgangsbohrungen (11), die im Deckel (2) angeordnet sind, eine längliche Form aufweisen.

9. Behälter nach einem der vorherigen Ansprüche, **dadurch gekennzeichnet, dass** zumindest zwei der Durchgangsbohrungen (11) des Deckels (2) im Verhältnis zur Mitte (C) des besagten Deckels (2) symmetrisch angeordnet sind.

10. Behälter nach einem der vorherigen Ansprüche, **dadurch gekennzeichnet, dass** der besagte zumindest eine Hebegurt (1) aus einem flexiblen Material geformt ist.

11. Behälter nach einem der vorherigen Ansprüche, **dadurch gekennzeichnet, dass** zumindest zwei der Durchgangsbohrungen (11), die im Deckel (2) angeordnet sind, und im Verhältnis zur Mitte (C) des besagten Deckels (2) symmetrisch angeordnet sind, eine längliche Form aufweisen und eine gegebene Länge (L) aufweisen und einen Geradenabschnitt (S) senkrecht zum Durchmesser (D) bilden, der die besagten Durchgangsbohrungen (11) verbindet.

12. Behälter nach einem der vorherigen Ansprüche, **dadurch gekennzeichnet, dass** der Behälterkörper (9) an seiner Basis (9b) einen ersten Boden (6) und einen zweiten Boden (16) umfasst, wobei der besagte zweite Boden (16) im Verhältnis zum ersten Boden (6) so außerhalb liegt, dass eine Struktur mit doppeltem Boden (6, 16) gebildet wird.

13. Behälter nach einem der vorherigen Ansprüche, **dadurch gekennzeichnet, dass** sich der besagte zumindest eine Hebegurt (1) zumindest teilweise zwischen dem besagten ersten Boden (6) und dem zweiten Boden (16) erstreckt.

14. Verwendung eines Behälters (10) nach einem der vorherigen Ansprüche zum Konditionieren einer Schweißdrahtspule (4).

15. Bogenschweißverfahren mit Laserstrahl oder Laser-Lichtbogen Hybridschweißverfahren unter Verwendung eines Behälters (10) nach einem der Ansprüche 1 bis 13, eine Schweißdrahtspule (4) umfassend.

## Claims

1. Container (10) for a coil (4) of welding wire comprising:
- a container body (9) comprising an external peripheral wall (7) and an internal volume (8) designed, and dimensioned to receive a coil of welding wire (4),
- said container body (9) comprising at least one first bottom (6) at its base (9b), and a lid (2) at its upper end (9a), and
- at least one lifting strap (1) mainly extending inside the internal volume (8) of the container body (9), said lifting strap (1) comprising end portions (1a, 1b) located outside the container (10), said end portions (1a, 1b) of strap (1) exiting the container (10) through passage openings (11),
**characterised in that** said passage openings (11) are formed in the lid (2) to seal the upper end (9a) of the container body (9).

2. Container as claimed in the preceding claim, **characterised in that** the end portions (1a, 1b) located outside the container (10) each comprise a gripping structure (12) for their attachment to a lifting hook, particularly to a crane hook.

3. Container according to one of the preceding claims, **characterised in that** the end portions (1a, 1b) each comprise a gripping structure (12) in the form of a loop.

4. Container according to one of the preceding claims, **characterised in that** at the centre of the internal volume (8) of the container body (9) is positioned an internal maintenance structure (13) of the coil (4).

5. Container according to one of the preceding claims, **characterised in that** the first bottom (6) of the body (9) of the container comprises a first positioning structure (5) that cooperates with the internal maintenance structure (13) of the coil (4) in order to allow for a predefined positioning of said internal maintenance structure (13) of the coil (4) within the internal volume (8) of the container body (9), more preferably a centred positioning of the hollow cylinder.

6. Container according to one of the preceding claims, **characterised in that** the lid (2) comprises, on an internal face (2a) located on the site of the internal compartment (8), a second positioning structure (3) that cooperates with the internal maintenance structure (13) of the coil (4) in order to allow for a predefined positioning of the lid (2) in relation to said internal maintenance structure (13) of the coil (4), more preferably a centred positioning of the lid (2) in relation to the hollow cylinder.

7. Container according to one of the preceding claims, **characterised in that** the lid (2) is removable, preferably the lid (2) is made of wood fibres.

8. Container according to one of the preceding claims, **characterised in that** the passage openings (11) formed in the lid (2) have an oblong shape.

9. Container according to one of the preceding claims, **characterised in that** at least two of the passage openings (11) of the lid (2) are formed symmetrically with respect to the centre (C) of said lid (2).

10. Container according to one of the preceding claims, **characterised in that** said at least one lifting strap (1) is made of a flexible material.

11. Container according to one of the preceding claims, **characterised in that** at least two of the passage openings (11) formed in the lid (2) and symmetrical with respect to the centre (c) of said lid (2) have an oblong shape presenting a given length (L) forming a right-hand side segment (S) perpendicular to the diameter (D) uniting said passage openings (11).

12. Container according to one of the preceding claims, **characterised in that** the container body (9) comprises, at its base (9b), a first bottom (6) and second bottom (16), said second bottom (16) being located outside compared to the first bottom (6) in such a way as to form a double-bottom structure (6, 16).

13. Container according to one of the preceding claims, **characterised in that** said at least one lifting strap (1) extends, at least partially, between said first bottom (6) and second bottom (16).

14. Use of a container (10) according to one of the preceding claims for packaging a coil of welding wire (4).

15. Method of arc welding, by laser beam or hybrid arc-laser welding implementing a container (10) according to one of claims 1 to 13 containing a coil of welding wire (4).
